# EUROPEAN PATENT APPLICATION

(11) **EP 4 016 472 A1**
(43) Date of publication of application: **22.06.2022**
(21) Application number: 21208625.0
(22) Date of filing: 16.11.2021
(51) Int. Cl.: G06V 10/778, G06V 10/80

(54) **MAINTENANCE COMPUTING SYSTEM AND METHOD FOR AIRCRAFT WITH PREDICTIVE CLASSIFIER**

(30) Priority: 14.12.2020 US 202063125108 P
(71) Applicant: The Boeing Company, Chicago, IL 60606-1596 (US)
(72) Inventor: SWEERS, Gregory James, CHICAGO, 60606 (US); GEORGESON, Gary E., CHICAGO, 60606 (US)
(74) Representative: Bugnion S.p.A. - US1

(57) **Abstract**

A computing system (10) includes a processor (12) and a non-volatile memory (20) storing executable instructions that, in response to execution by the processor (12), cause the processor (12) to execute an inspection classifier (22) including at least a first artificial intelligence model (22a), the inspection classifier (22) being configured to receive run-time event input data (28A-C) from a plurality of data sources associated with an aircraft, the data sources including structural health monitoring sensors instrumented on the aircraft; extract features (22f) of the run-time event input data (28A-C); determine a predicted inspection classification (54A) based upon the extracted features (22f), the predicted inspection classification (54A) being one of a plurality of candidate inspection classifications (30Aa-c); and output the predicted inspection classification (54A).

## Description

### FIELD

The subject disclosure relates generally to machine learning and artificial intelligence processes and systems, and in particular to determining appropriate classifications for maintenance events, repairs, and repair follow-up. The techniques described herein can be applied to data related to aircraft, for example.

### BACKGROUND

Aircraft maintenance, including inspection following in-flight events, initial repair, and follow-up inspections and repairs, is important to keep an aircraft flight ready, and is also a significant cost for vehicle operators. Such maintenance often involves nondestructive evaluation of a portion of an aircraft, followed by an initial repair. Use of non-destructive evaluation techniques can be labor intensive and is subject to human judgment regarding the appropriate inspection technique, repairs, and follow up schedule to pursue.

### SUMMARY

This summary is not an extensive overview of the specification. It is intended to neither identify key or critical elements of the specification nor delineate any scope particular embodiments of the specification, or any scope of the claims. Its sole purpose is to present some concepts of the specification in a simplified form as a prelude to the more detailed description that is presented in this disclosure.

A computing system is disclosed that comprises a processor and a non-volatile memory storing executable instructions that, in response to execution by the processor, cause the processor to execute an inspection classifier including at least a first artificial intelligence model. The inspection classifier is configured to receive run-time event input data from a plurality of data sources associated with an aircraft. The data sources include structural health monitoring sensors instrumented on the aircraft. The inspection classifier extracts features of the run-time event input data, determines a predicted inspection classification based upon the extracted features, and outputs the predicted inspection classification. The predicted inspection classification is one of a plurality of candidate inspection classifications. The features, functions, and advantages that have been discussed can be achieved independently in various embodiments or can be combined in yet other embodiments further details of which can be seen with reference to the following description and drawings.

### BRIEF DESCRIPTION OF THE DRAWINGS

Fig. 1 shows an illustration depicting a maintenance system according to an example embodiment of the subject disclosure.
Fig. 2 shows an illustration depicting an inspection classifier, repair classifier, and monitoring classifier of the maintenance system according to Fig. 1.
Fig. 3A shows an illustration depicting a training phase of the inspection classifier according to Fig. 1, including an initial training phase and a feedback training phase.
Fig. 3B shows an illustration depicting a training phase of the repair classifier according to Fig. 1, including an initial training phase and a feedback training phase.
Fig. 3C shows an illustration depicting a training phase of the monitoring classifier according to Fig. 1, including an initial training phase and a feedback training phase.
Fig. 4A shows an illustration depicting the possible inspection classifications, repair classifications, and monitoring classifications that can be outputted by the inspection classifier, the repair classifier, and the monitoring classifier, respectively, according to an example of the subject disclosure.
Fig. 4B shows an illustration depicting the possible inspection classifications, repair classifications, and monitoring classifications that can be outputted by the inspection classifier, the repair classifier, and the monitoring classifier, respectively, according to another example of the subject disclosure.
Fig. 5 shows an illustration depicting a multi-dimensional feature space of the inspection classifier according to Fig. 1.
Fig. 6 shows an illustration of an exemplary graphical user interface of the inspection classifier according to the example embodiment of Fig. 4A of the subject disclosure.
Fig. 7 shows a diagram illustrating a process flow for the operation of the maintenance system of FIG. 1 at run-time with feedback training, according to one specific example of the subject disclosure.
Fig. 8A shows a flow diagram of a training phase of a maintenance computing method for use in connection with aircraft maintenance, according to an example of the subject disclosure.
Fig. 8B is a continuation of the flow diagram of Fig. 8A, showing a run-time phase of the method, illustrating process steps involved in using an inspection classifier including feedback training.
Fig. 8C is a continuation of the flow diagram of Fig. 8B, showing a run-time phase of the method, illustrating process steps involved in using a repair classifier including feedback training.
Fig. 8D is a continuation of the flow diagram of Fig. 8C, showing a run-time phase of the method, illustrating process steps involved in using a monitoring classifier including feedback training.
Fig. 9 shows a schematic view of an example computing environment that can be used according to the systems and methods described herein.

### DETAILED DESCRIPTION

In view of the above, both a challenge and opportunity exists to improve the accuracy, reliability and efficiency of inspection and repair diagnoses by applying machine learning and artificial intelligence to maintenance processes. Accordingly, a maintenance system is provided by which inspection, repair, and monitoring predictions can be made based on run-time input using separate artificial intelligence models, each of which can be subject to feedback training based on inputs from technicians for improved performance over time.

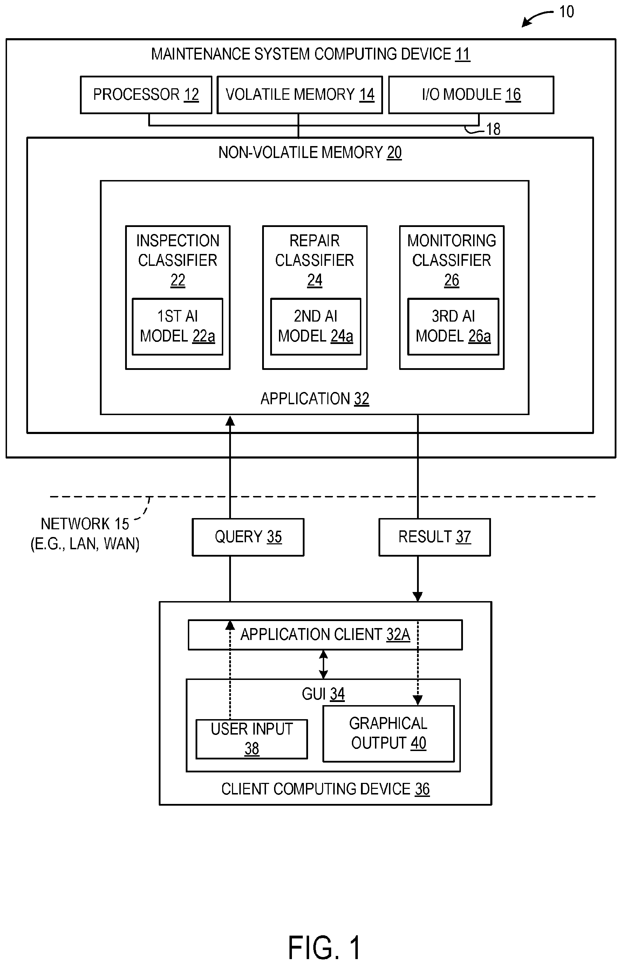

Referring to Fig. 1, a maintenance system 10 is provided for use in maintenance of vehicles (e.g., aircraft, watercraft, spacecraft, automobiles, etc.). The system 10 comprises a maintenance computing device 11 comprising a processor 12, an input/output module 16, volatile memory 14, and non-volatile memory 20 storing an application 32 and three classifiers: an inspection classifier 22, a repair classifier 24, and a monitoring classifier 26 which comprise a first artificial intelligence model 22a, a second artificial intelligence model 24a, and a third artificial intelligence model 26a, respectively. A bus 18 can operatively couple the processor 12, the input/output module 16, and the volatile memory 14 to the non-volatile memory 20. Although the application 32 and the classifiers 22, 24, 26 are depicted as hosted at one computing device 11, it will be appreciated that the application 32 and the classifiers 22, 24, 26 can alternatively be hosted across a plurality of computing devices to which the computing device 11 is communicatively coupled via a network 15, including a client computing device 36 operatively coupled to the maintenance computing device 11. In some examples, the network 15 can take the form of a local area network (LAN), wide area network (WAN), wired network, wireless network, personal area network, or a combination thereof, and can include the Internet.

The system 10 comprises a processor 12 configured to store the application 32 and classifiers 22, 24, 26 in non-volatile memory 20 that retains instructions stored data even in the absence of externally applied power, such as FLASH memory, a hard disk, read only memory (ROM), electrically erasable programmable memory (EEPROM), etc. The instructions include one or more programs, including application 32, and data used by such programs sufficient to perform the operations described herein. In response to execution by the processor 12, the instructions cause the processor 12 to execute the inspection classifier 22 including at least the first artificial intelligence model 22a, the repair classifier 24 including at least the second artificial intelligence model 24a, and/or the monitoring classifier 26 including at least the third artificial intelligence model 26a.

The processor 12 is a microprocessor that includes one or more of a central processing unit (CPU), a graphical processing unit (GPU), an application specific integrated circuit (ASIC), a system on chip (SOC), a field-programmable gate array (FPGA), a logic circuit, or other suitable type of microprocessor configured to perform the functions recited herein. The system 10 further includes volatile memory 14 such as random access memory (RAM), static random access memory (SRAM), dynamic random access memory (DRAM), etc., which temporarily stores data only for so long as power is applied during execution of programs.

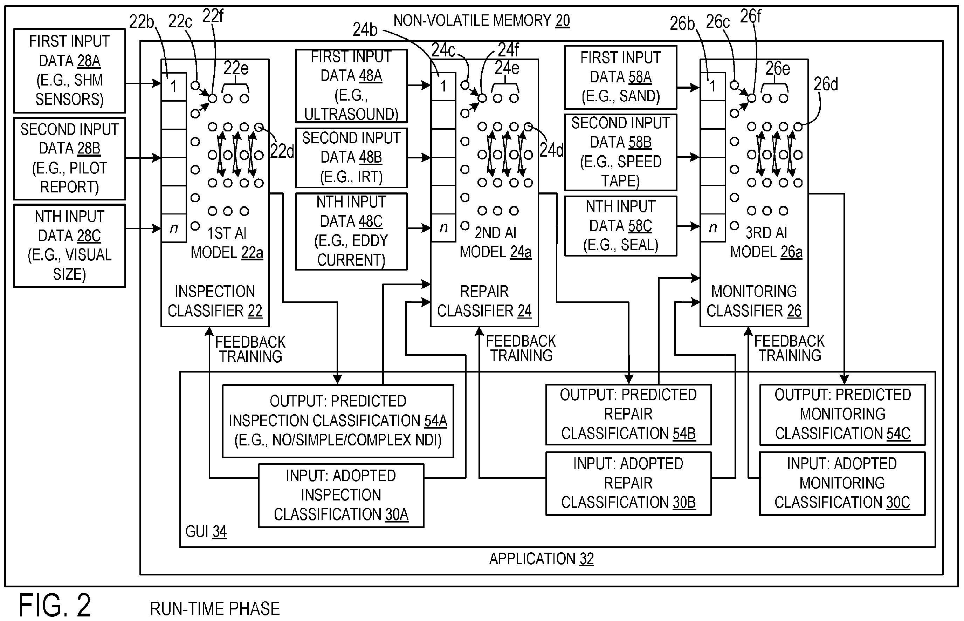

In one example, a user operating a client computing device 36 can send a maintenance-related query 35 to the maintenance computing device 11. As described further with reference to Fig. 2, the maintenance-related query 35 can include input data 28A-C pertaining to an inspection for the inspection classifier 22, inspection-associated input data 48A-C pertaining to a repair for the repair classifier 24, or repair-associated input data 58A-C pertaining to a repair monitoring action for the monitoring classifier 26. The processor 12 of the maintenance computing device 11 is configured to receive the maintenance-related query 35 from the user and execute one of the classifiers 22, 24, 26 of the application 32 to determine the most appropriate inspection classification via the inspection classifier 22, determine the most appropriate repair classification via the repair classifier 24, and/or determine the most appropriate monitoring classification via the monitoring classifier 26. Thus, as discussed below, based on the repair design indicated by the repair-associated input data 58A-58C, the monitoring classification produced by the monitoring classifier 26 may indicate, for example, a predicted lifecycle of the repair, a monitoring schedule for the repair, and/or a monitoring repair action, which is a follow up repair to be made during the monitoring period to the initial repair for which repair-associated input data was collected. The processor 12 then returns a response 37 (query results) to the maintenance-related query 35 based on the determination that was made by the classifiers 22, 24, 26 of the application 32, the response 37 containing the outputs that are the result of the determination that was made by the classifiers 22, 24, 26.

The client computing device 36 can execute an application client 32A to send a query 35 to the maintenance computing device 11 upon detecting a user input 38, and subsequently receive the query results 37 from the maintenance computing device 11. The application client 32A can be coupled to a graphical user interface 34 of the client computing device 36 to display a graphical output 40 of the received query results 37.

Referring to Fig. 2, a view of the inspection classifier 22, repair classifier 24, and monitoring classifier 26 is depicted. The computing system 10 comprises a processor 12 and a non-volatile memory 20 storing executable instructions that, in response to execution by the processor 12, cause the processor 12 to execute an inspection classifier 22 including at least a first artificial intelligence model 22a. The inspection classifier 22 is configured to receive run-time event input data 28A-C from a plurality of data sources associated with a vehicle (e.g., an aircraft), the data sources including structural health monitoring sensors instrumented on the vehicle. The structural health monitoring sensors can be selected from the group consisting of inertial accelerometers, inertial gyroscopes, strain gauges, displacement transducers, air speed sensors, temperature sensors, and the like. Although three sets of run-time event input data 28A-C are shown in Fig. 2, it will be appreciated that the number of sets of run-time event input data is not particularly limited, and may alternatively number four or more sets of input data, for example.

The inspection classifier 22 extracts features 22f of the run-time event input data 28A-C, which can include at least one of camera images, audio data, or dimensional measurements, determines a predicted inspection classification 54A based upon the extracted features 22f, and outputs the predicted inspection classification 54A. The predicted inspection classification 54A is one of a plurality of candidate inspection classifications. The processor 12 receives user input 38 of an adopted inspection classification 30A for the run-time event input data 28A-C, and performs feedback training of the first artificial intelligence model 22a using the run-time event input data 28A-C and the adopted inspection classification 30A as a feedback training data pair. The first artificial intelligence model 22a can include an input layer 22b connected to one or more convolutional layers 22c and an output layer 22d including a plurality of nodes 22e each indicating a value for an extracted feature vector of an extracted feature 22f.

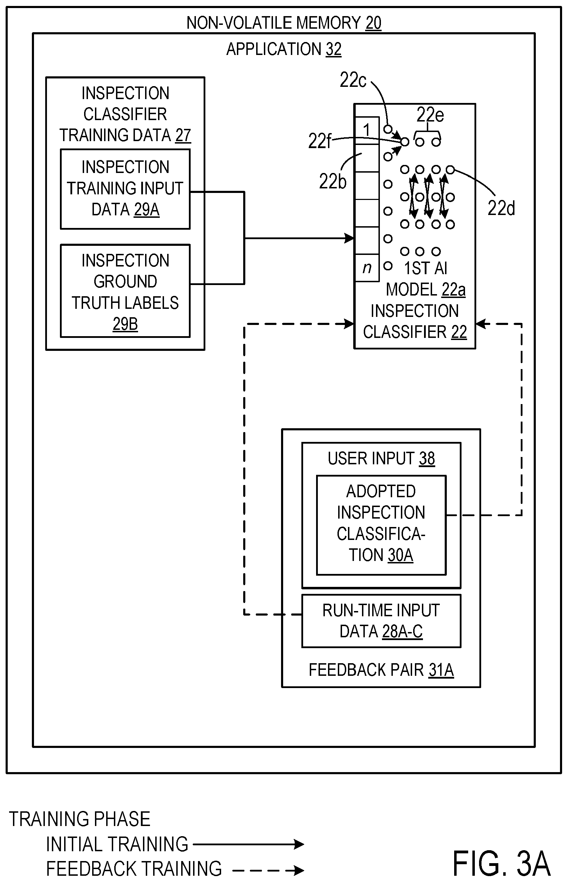

Referring to Fig. 3A, the inspection classifier 22 has been trained on inspection classifier training data 27 including inspection training input data 29A and associated inspection ground truth labels 29B. The inspection classifier training data 27 can further include at least one of camera images, audio data, or dimensional measurements. The inspection training input data 29A includes structural health data from structural health monitoring sensors instrumented on the vehicle. The processor 12 is configured to pair the inspection ground truth labels 29B with the inspection training input data 29A, and perform training of the first artificial intelligence model 22a using pairs of inspection ground truth labels 29B and inspection training input data 29A in the inspection classifier training data 27.

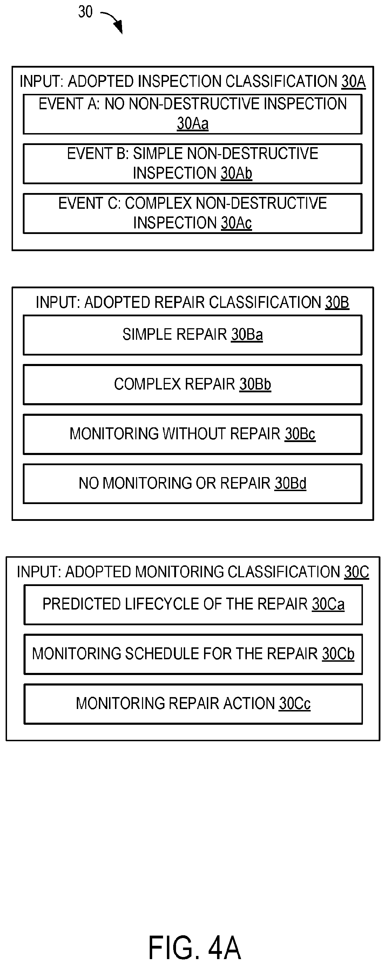

Likewise, the processor 12 is configured to receive user input 38 including the adopted inspection classification 30A for the run-time input data 28A-C, pair the adopted inspection classification 30A with the run-time input data 28A-C to create an inspection feedback training data pair 31A, and perform feedback training of the inspection classifier 22 using the inspection feedback training data pair 31A. As shown in Fig. 4A, the user inputted inspection classifications 30A can be selected from a plurality of candidate inspection classifications 30Aa-c, which can include Event A: recommending no non-destructive inspection 30Aa, Event B: recommending a simple non-destructive inspection 30Ab, and Event C: recommending a complex non-destructive inspection 30Ac, for example.

Referring back to Fig. 2, the processor is further configured to execute a repair classifier 24 including at least a second artificial intelligence model 24a. The repair classifier 24 is configured to receive run-time inspection input data including inspection-associated input data 48A-C and the adopted inspection classification 30A, extract features of the run-time inspection input data, determine a predicted repair classification 54B based upon the extracted features 24f, and output a predicted repair classification 54B. Although three sets of inspection-associated input data 48A-C are shown in Fig. 2, it will be appreciated that the number of sets of inspection-associated input data is not particularly limited, and may alternatively number four or more sets of input data, for example. The predicted repair classification 54B is one of a plurality of candidate repair classifications. The processor 12 receives user input 38 of an adopted repair classification 30B for the run-time inspection-associated input data 48A-C, and performs feedback training of the second artificial intelligence model 24a using the run-time inspection-associated input data 48A-C and the adopted repair classification 30B as a feedback training data pair. The second artificial intelligence model 24a can include an input layer 24b connected to one or more convolutional layers 24c and an output layer 24d including a plurality of nodes 24e each indicating a value for an extracted feature vector of an extracted feature 24f.

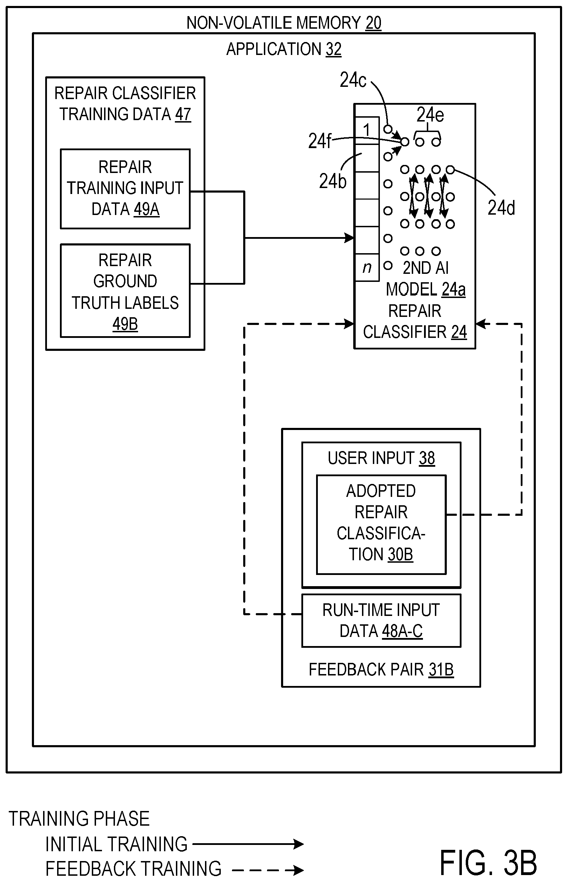

Referring to Fig. 3B, the repair classifier 24 has been trained on repair classifier training data 47 including repair training input data 49A and associated repair ground truth labels 49B. The repair classifier training data 47 includes imaging studies and electrical measurements. The processor 12 is configured to pair the repair ground truth labels 49B with the repair training input data 49A, and perform training of the second artificial intelligence model 24a using pairs of ground truth labels 49B and repair training input data 49A in the repair classifier training data 47.

Likewise, the processor 12 is configured to receive user input 38 including the adopted repair classification 30B for the inspection-associated input data 48A-C of the run-time inspection input data, pair the adopted repair classification 30B with the inspection-associated input data 48A-C to create a repair feedback training data pair 31B, and perform feedback training of the repair classifier 24 using the repair feedback training data pair 31B. As shown in Fig. 4A, the user inputted repair classifications 30B can be selected from a plurality of candidate repair classifications 30Ba-d. The candidate repair classifications 30Ba-d can include simple repair 30Ba, complex repair 30Bb, monitoring without repair 30Bc, and no monitoring or repair 30Bd. Referring back to Fig. 2, the processor 12 further executes a monitoring classifier 26 including at least a third artificial intelligence model 26a. The monitoring classifier 26 is configured to receive run-time repair input data including repair-associated input data 58A-C and the adopted repair classification 30B, extract features 26f of the run-time repair input data, determine a predicted monitoring classification 54C based upon the extracted features 26f, and output the predicted monitoring classification 54C. Although three sets of repair-associated input data 58A-C are shown in Fig. 2, it will be appreciated that the number of sets of repair-associated input data is not particularly limited, and may alternatively number four or more sets of input data, for example. The predicted monitoring classification 54C is one of a plurality of candidate monitoring classifications. The processor 12 receives user input 38 of an adopted monitoring classification 30C for the repair-associated input data 58A-C of the run-time repair input data, and performs feedback training of the third artificial intelligence model 26a using the repair-associated input data 58A-C and the adopted monitoring classification 30C as a feedback training data pair. The third artificial intelligence model 26a can include an input layer 26b connected to one or more convolutional layers 26c and an output layer 26d including a plurality of nodes 26e each indicating a value for an extracted feature vector of an extracted feature 26f.

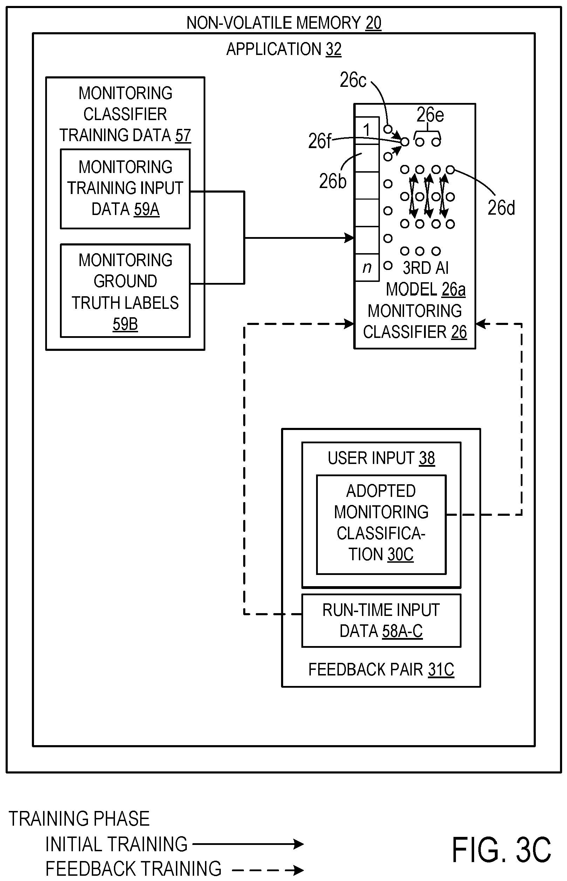

Referring to Fig. 3C, the monitoring classifier 26 has been trained on monitoring classifier training data 57 including monitoring training input data 59A and associated monitoring ground truth labels 59B. The monitoring training input data 59A include at least one of repair materials or type of repair. The processor 12 is configured to pair the monitoring ground truth labels 59B with the monitoring training input data 59A, and perform training of the third artificial intelligence model 26a using pairs of monitoring ground truth labels 59B and monitoring training input data 59A in the monitoring classifier training data 57.

Likewise, the processor 12 is configured to receive user input 38 including the adopted monitoring classification 30C for the run-time input data 58A-C, pair the adopted monitoring classification 30C with the run-time input data 58A-C to create a monitoring feedback training data pair 31C, and perform feedback training of the monitoring classifier 26 using the monitoring feedback training data pair 31C. As shown in Fig. 4A, the user inputted monitoring classifications 30C can be selected from a plurality of candidate predicted monitoring classifications 30Ca-c. The candidate predicted monitoring classifications 30Ca-c can include a predicted lifecycle of the repair 30Ca, a monitoring schedule for the repair 30Cb, and a monitoring repair action 30Cc.

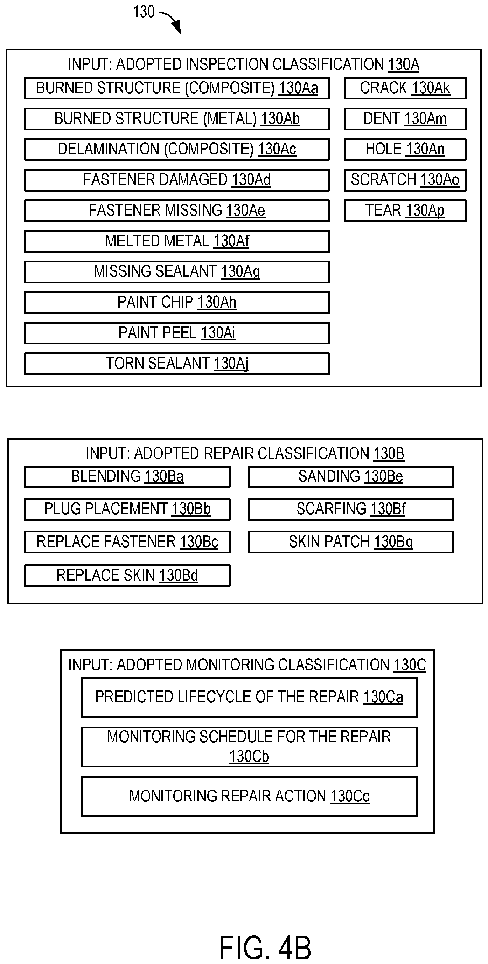

Referring to Fig. 4B, another example of ground truth labels 130 associated with training input data is illustrated. The user inputted inspection classifications 130A can be selected from burned structure (composite) 130Aa, burned structure (metal) 130Ab, delamination (composite) 130Ac, fastener damaged 130Ad, fastener missing 130Ae, melted metal 130Af, missing sealant 130Ag, paint chip 130Ah, paint peel 130Ai, torn sealant 130Aj, crack 130Ak, dent 130Am, hole 130An, scratch 130Ao, and tear 130Ap. The user inputted repair classifications 130B can be selected from blending 130Ba, plug placement 130Bb, replace fastener 130Bc, replace skin 130Bd, sanding 130Be, scarfing 130Bf, and skin patch 130Bg. The user inputted predicted monitoring classifications 130C can include a predicted lifecycle of the repair 130Ca, a monitoring schedule for the repair 130Cb, and a monitoring repair action 130Cc.

For example, for lightning strike damage leaving molten metal above the skin surface, a user can input a repair classification of blending 130Ba to use a sanding technique that removes the metal, leaving a slight indentation where the metal has been sanded away. For damage in field areas where no structure is behind the skin, a user can input a repair classification of plug placement 130Bb to use a freeze plug where the hole is inspected and prepared, followed by installation of a skin "plug" that is frozen to contract in size and then friction fit into the hole by the warmer operation temperature. For fastener damage, a user can input a repair classification of replacing fastener 130Bc to remove the fastener, inspect the hole for possible cracking, oversizing the hole, and installing the replacement fastener. In some complex damage cases, a user can input a repair classification of replacing skin 130Bd when skin patches are not appropriate. For lesser skin area damage such as minor, a user can input a repair classification of sanding 130Be if it is possible that sanding can remove minor damage provided a certain skin thickness is maintained, surface smoothness is within prescribed bounds, and resulting surface unevenness are within allowable range, especially in the area of the pitot probes and angle of attach sensors. For lightning strike burns on composite surfaces, a user can input a repair classification of scarfing 130Bf to remove damage in a circular fashion making sure that the number of composite layers (plies) are counted as the scarfing removes all of the damage. The number of layers affected by the scarf can be used to determine the type of repair needed. For field area skins, in cases where the damage is hard to repair with simple treatment, a user can input a repair classification of skin patch 130Bg to remove damage such as tears or large holes by material cutout with a patch put in its place.

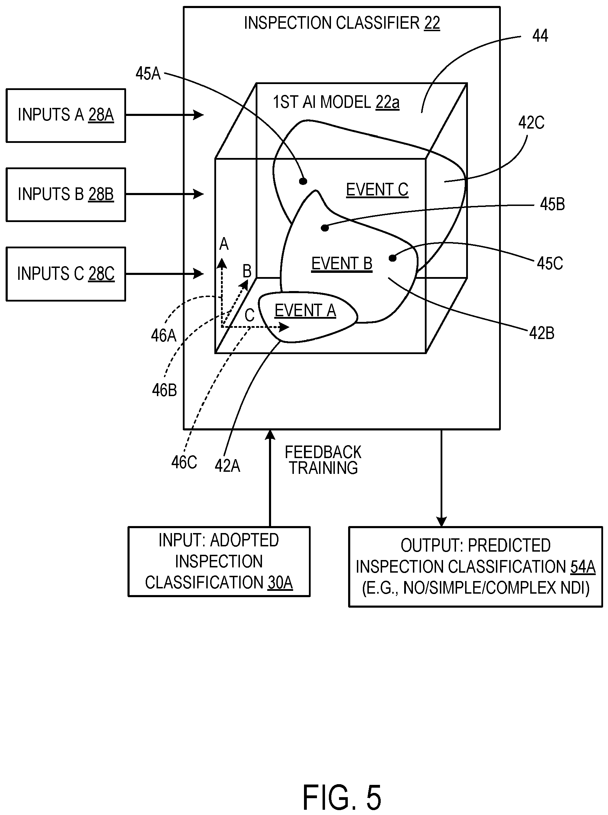

Referring to Fig. 5, a detailed view of the inspection classifier 22 is illustrated with a multi-dimensional space 44. It will be appreciated that the repair classifier 24 and the monitoring classifier 26 can be similarly configured with multi-dimensional spaces that are adapted to their respective inputs. Multimodal information from multiple sensors is organized into a multi-dimensional space 44 containing a sum of inputs 28A-C to define the categorization of events. A data point 45A is created in the multi-dimensional space 44 based on a first dimension 46A corresponding to the first run-time event input data 28A, a second dimension 46B corresponding to the second run-time event input data 28B, and the third dimension 46C corresponding to the third run-time event input data 28C. Over time, a plurality of data points 45A, 45B, and 45C are created in this multi-dimensional space 44, so that the multi-dimensional space 44 correlate to a result output: a predicted inspection classification 54A.

In this example, events are categorized into one of three categories: A-Event 42A (minor impact event, corresponding to "no non-destructive inspection"), B-Event 42B (moderate impact event, corresponding to "simple non-destructive inspection"), and C-Event 42C (major impact event, "complex non-destructive inspection"). An algorithm is used within the multi-dimensional space 44 as a guide for the next action by summing and factoring the inputs 42A-C appropriately, adjusting factors for events based on the run-time event input data 28A-C and the adopted inspection classification 30A.

Over time, the accuracy of the predicted inspection classification 54A outputted by the multi-dimensional space 44 increases by continuously adjusting to the input data 28A-C and added user input 30A that continue to be made as inputs to the first artificial intelligence model 22a.

Accordingly, in aviation applications, relative inputs from a diverse sensors set on and off an aircraft to be compared, and predicted steps for the repair or monitoring of aircraft can be communicated for continued aircraft operation. Using machine learning within a networked design, a course of action can be concluded using a multi-dimensional view of various sensory inputs, which surpasses the capabilities of spreadsheets and database relational processing with three in more linear tools.

A value is presented by the multi-dimensional space correlation that is then used as a response to manufacturing, design, or life-cycle action in service. Machine learning is used to tie data to decisions made in the past, helping define the multi-dimensional space by taking inputs for examples that have less influence on the output, and then the algorithm used in the multi-dimensional space 44 can be adjusted over time as many data points 45A-C are created within the multi-dimensional space 44, providing for a lower influence on the outputted classifications 54A.

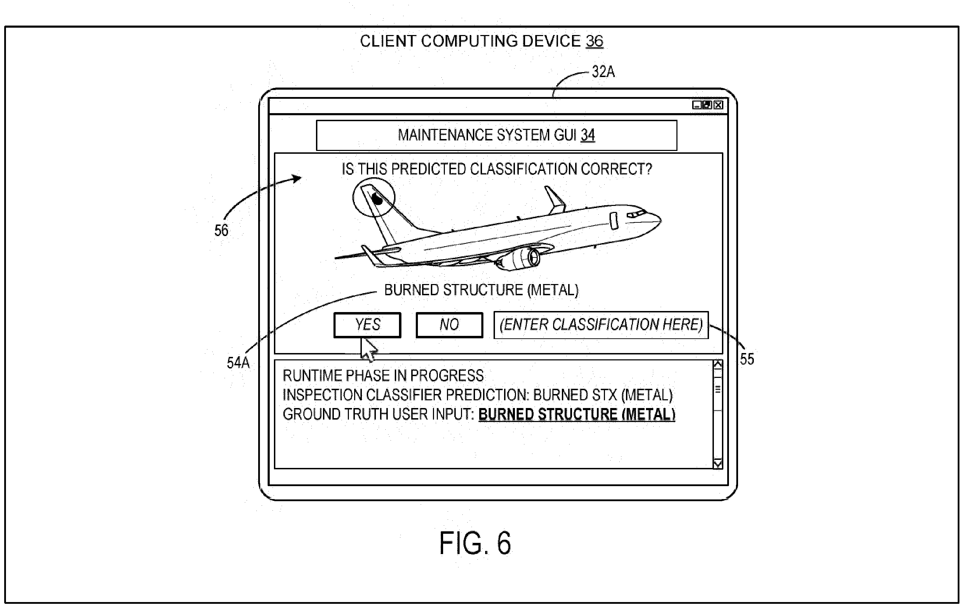

Referring to Fig. 6, an exemplary maintenance system graphical user interface 34 is illustrated of the client computing device 36 executing the application client 32A according to the example of Fig. 1. In this example, the inspection classifier has outputted a predicted inspection classification 54A of burned structure (metal) for run-time event input data of an aircraft with identifiable damage to the tail. The user prompt 56 for the user is shown on the graphical user interface 34 for the user to indicate whether or not to accept the predicted inspection classification 54A. If the user does not accept the predicted inspection classification 54A, a text box 55 is provided for the user to input a new inspection classification for the damage to the tail. In other embodiments, a multiple choice selector or a drop-down menu can alternatively be configured for the user to input a new alternative inspection classification, for example. The newly inputted inspection classification is then used for the feedback training of the inspection classifier. If the user accepts the predicted inspection classification 54A, then the predicted inspection classification is then used for the feedback training of the inspection classifier.

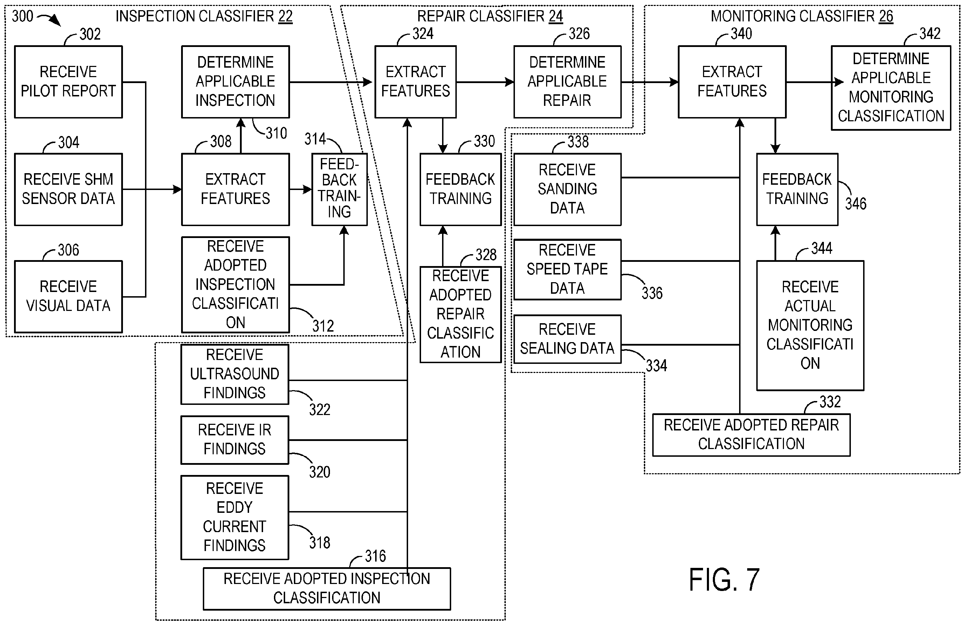

Referring to Fig. 7, a flow chart is illustrated of a method 300 for training the inspection classifier, the repair classifier, and the monitoring classifier according to one example. The following description of method 300 is provided with reference to the software and hardware components described above and shown in Figs. 1-6 and 9. It will be appreciated that method 300 also can be performed in other contexts using other suitable hardware and software components.

At step 302, the inspection classifier receives a pilot report as run-time event input data. At step 304, the inspection classifier receives structural health monitoring sensor data from structural health monitoring sensors instrumented on aircraft as run-time event input data. At step 306, the inspection classifier receives visual data of aircraft as run-time event input data. At step 308, the inspection classifier extracts features of the run-time event input data. At step 310, the inspection classifier determines a predicted inspection classification (applicable inspection) based upon the extracted features, and outputs the predicted inspection classification. At step 312, the inspection classifier receives user input of an adopted inspection classification for feedback training. At step 314, feedback training is performed for the inspection classifier using the run-time event input data and user input of an adopted inspection classification.

At step 316, the repair classifier receives user input of the adopted inspection classification. At step 318, the repair classifier receives eddy current findings as inspection-associated input data. At step 320, the repair classifier receives infrared findings as inspection-associated input data. At step 322, the repair classifier receives ultrasound findings as inspection-associated input data. At step 324, the repair classifier extracts features of the inspection-associated input data. At step 326, the repair classifier determines a predicted repair classification (applicable repair) based upon the extracted features, and outputs the predicted repair classification. At step 328, the repair classifier receives user input of an adopted repair classification for feedback training. At step 330, feedback training is performed for the repair classifier using the inspection-associated input data and the user input of an adopted repair classification.

At step 332, the monitoring classifier receives the user input of the adopted repair classification. At step 334, the monitoring classifier receives sealing data as run-time repair input data. At step 336, the monitoring classifier receives speed tape data as run-time repair input data. At step 338, the monitoring classifier receives sanding data as run-time repair input data. At step 340, the monitoring classifier extracts features of the run-time repair input data. At step 342, the monitoring classifier determines a predicted monitoring classification (applicable monitoring action) based upon the extracted features, and outputs the predicted monitoring classification. At step 344, the monitoring classifier receives user input of an adopted monitoring classification. At step 346, feedback training is performed for the monitoring classifier using the run-time repair input data and the user input of the adopted monitoring classification.

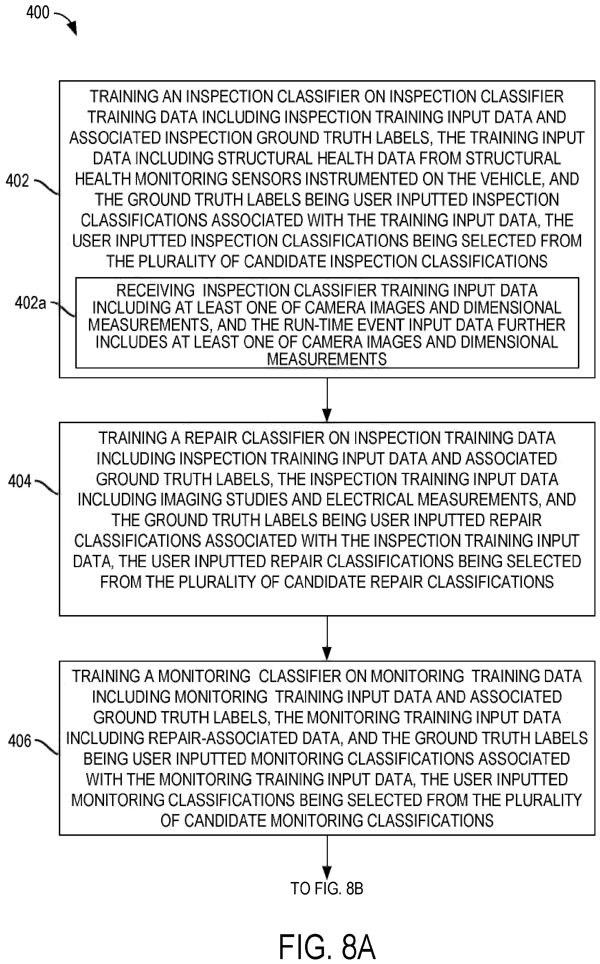

Referring to Figs. 8A-8D, a flow chart is illustrated of a maintenance computing method 400 for use in maintenance of a vehicle (e.g., an aircraft). In Fig. 8A, process steps of method 400 related to training the inspection classifier, the repair classifier, and the monitoring classifier are shown. The following description of method 400 is provided with reference to the software and hardware components described above and shown in Figs. 1-6 and 9. It will be appreciated that method 400 also can be performed in other contexts using other suitable hardware and software components.

At step 402, an inspection classifier is trained on inspection classifier training data including inspection training input data and associated inspection ground truth labels, the training input data including structural health data from structural health monitoring sensors instrumented on the aircraft, and the ground truth labels being user inputted inspection classifications associated with the training input data, the user inputted inspection classifications being selected from the plurality of candidate inspection classifications. At step 402a, which can be included in step 402, inspection classifier training input data is received including at least one of camera images, audio data, or dimensional measurements, and the run-time event input data further includes at least one of camera images, audio data, or dimensional measurements.

At step 404, a repair classifier is trained on inspection training data including inspection training input data and associated ground truth labels, the inspection training input data including imaging studies and electrical measurements, and the ground truth labels being user inputted repair classifications associated with the inspection training input data, the user inputted repair classifications being selected from the plurality of candidate repair classifications. At step 406, a monitoring classifier is trained on monitoring training data including monitoring training input data and associated ground truth labels, the monitoring training input data including repair-associated data, and the ground truth labels being user inputted monitoring classifications associated with the monitoring training input data, the user inputted monitoring classifications being selected from the plurality of candidate monitoring classifications.

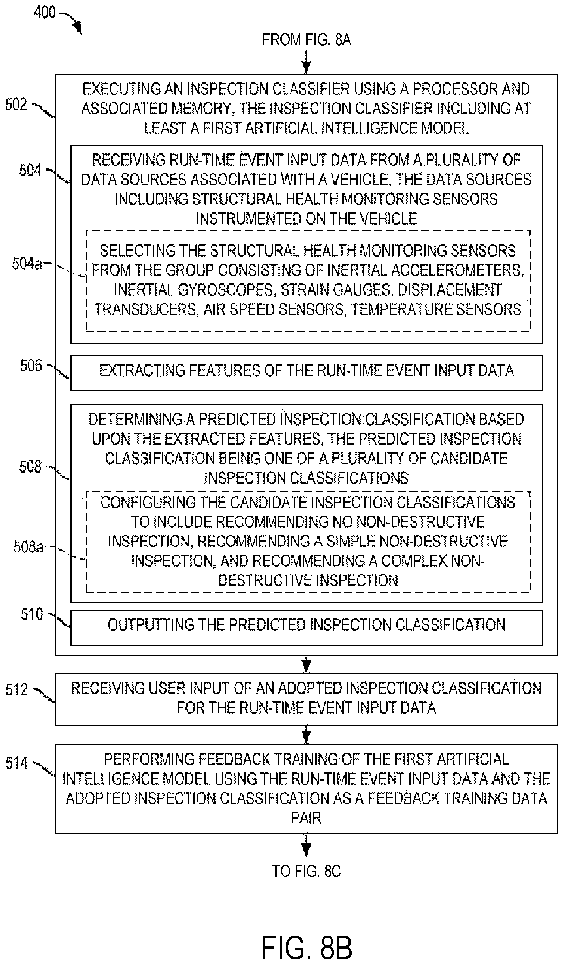

Referring to Fig. 8B, a flow chart is illustrated that is a continuation of the method 400 of Fig. 8A, and which illustrates executing and performing feedback training of an inspection classifier. At step 502, the inspection classifier is executed using a processor and associated memory, the inspection classifier including at least a first artificial intelligence model. Step 502 includes step 504 of receiving run-time event input data from a plurality of data sources associated with an aircraft, the data sources including structural health monitoring sensors instrumented on the aircraft, step 506 of extracting features of the run-time event input data, step 508 of determining a predicted inspection classification based upon the extracted features, the predicted inspection classification being one of a plurality of candidate inspection classifications, and step 510 of outputting the predicted inspection classification. Step 504 can include a step 504a of selecting the structural health monitoring sensors from the group consisting of inertial accelerometers, inertial gyroscopes, strain gauges, displacement transducers, air speed sensors, temperature sensors. Step 508 can include a step 508a of configuring the candidate inspection classifications to include recommending no non-destructive inspection, recommending a simple non-destructive inspection, and recommending a complex non-destructive inspection. Following step 502 of executing the inspection classifier, at step 512, user input is received of an adopted inspection classification for the run-time event input data. At step 514, feedback training is performed of the first artificial intelligence model using the run-time event input data and the adopted inspection classification as a feedback training data pair.

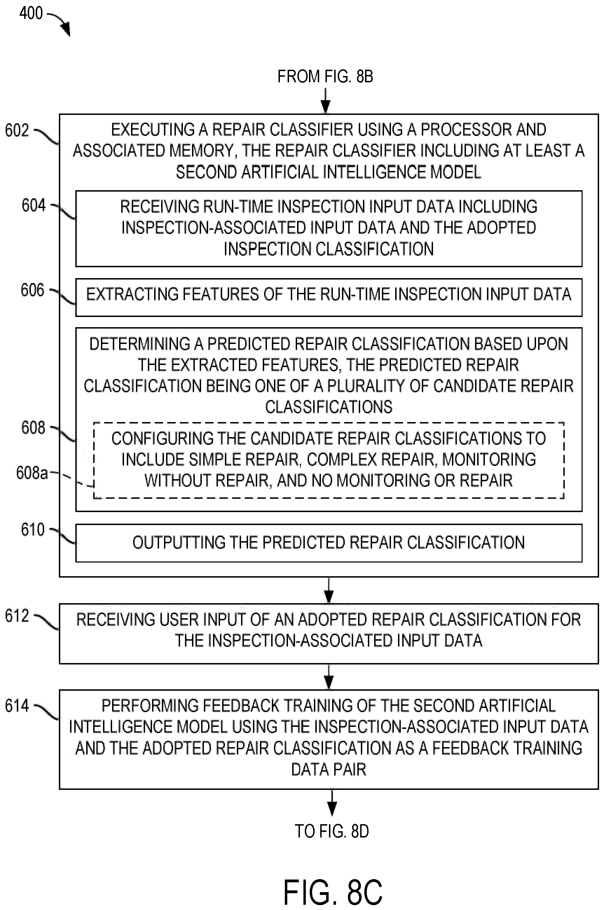

Referring to Fig. 8C, a flow chart is illustrated that is a continuation of the method 400 of Fig. 8B, and which illustrates executing and performing feedback training of a repair classifier. At step 602, the repair classifier is executed using a processor and associated memory, the repair classifier including at least a second artificial intelligence model. Step 602 includes step 604 of receiving run-time inspection input data including inspection-associated inputs and the adopted inspection classification, step 606 of extracting features of the run-time inspection input data, step 608 of determining a predicted repair classification based upon the extracted features, the predicted repair classification being one of a plurality of candidate repair classifications, and step 610 of outputting the predicted repair classification. Step 608 can include a step 608a of configuring the candidate repair classifications to include simple repair, complex repair, monitoring without repair, and no monitoring or repair.

Following step 602 of executing the repair classifier, at step 612, a user input is received of an adopted repair classification for the inspection-associated input data. At step 614, feedback training is performed of the second artificial intelligence model using the inspection-associated input data and the adopted repair classification as a feedback training data pair.

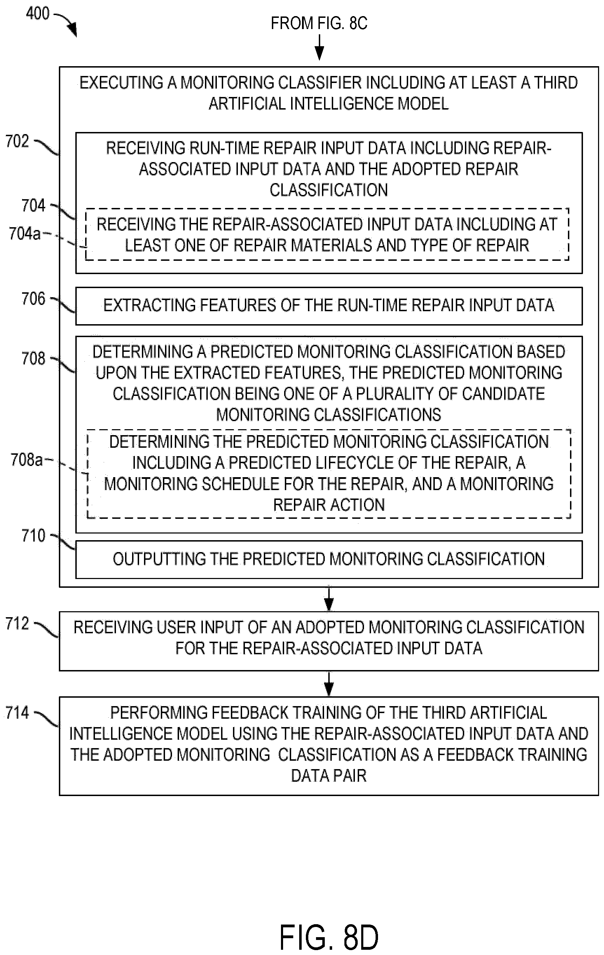

Referring to Fig. 8D, a flow chart is illustrated that is a continuation of the method 400 of Fig. 8C, and which illustrates executing and feedback training of a monitoring classifier. At step 702, the monitoring classifier is executed using a processor and associated memory, the monitoring classifier including at least a third artificial intelligence model.

Step 702 includes step 704 of receiving run-time repair input data including repair-associated input data and the adopted repair classification, step 706 of extracting features of the run-time repair input data, step 708 of determining a predicted monitoring classification based upon the extracted features, the predicted monitoring classification being one of a plurality of candidate monitoring classifications, and step 710 of outputting the predicted monitoring classification. Step 704 can include step 704a of receiving the repair-associated input data including at least one of repair materials or type of repair. Step 708 can include step 708a of determining the predicted monitoring classification including a predicted lifecycle of the repair, a monitoring schedule for the repair, and a monitoring repair action. Following step 702 of executing the monitoring classifier, at step 712, a user input is received of an adopted monitoring classification for the repair-associated input data. At step 714, feedback training is performed of the third artificial intelligence model using the repair-associated input data and the adopted monitoring classification as a feedback training data pair.

The above systems and methods offer the technical advantage of enabling machine learning techniques to both predict inspection classifications, repair classifications and follow up classifications associated with maintenance of aircraft componentry to aid human technicians in their inspections, repairs, and follow up actions, while at the same time affording the technicians control over the decisions made at each stage in the maintenance process. The systems and methods are configured to learn and improve the accuracy of their predictions over time as each artificial intelligence model is trained based on real world feedback from technicians. With such a system, an efficient and high-quality inspection, repair, and follow regime can be reliably maintained.

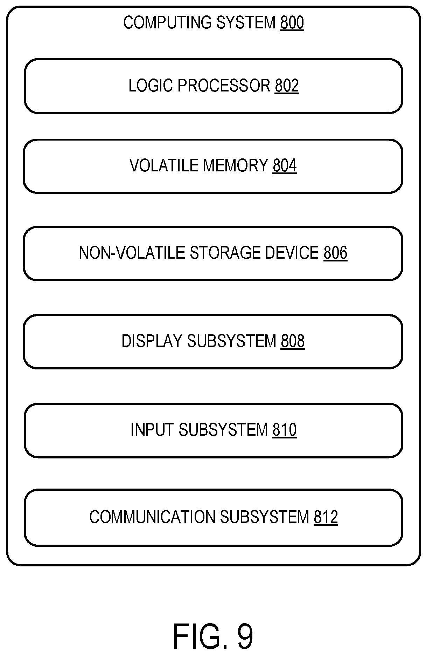

Fig. 9 schematically shows a non-limiting embodiment of a computing system 800 that can enact one or more of the processes described above. Computing system 800 is shown in simplified form. Computing system 800 can embody the maintenance computing device 11 or client computing device 36 described above and illustrated in Figs. 1 and 2. Computing system 800 can take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 800 includes a logic processor 802, volatile memory 804, and a non-volatile storage device 806. Computing system 800 can optionally include a display subsystem 808, input subsystem 810, communication subsystem 812, and/or other components not shown in Fig. 9.

Logic processor 802 includes one or more physical devices configured to execute instructions. For example, the logic processor can be configured to execute instructions that are part of one or more applications, programs, routines, libraries, objects, components, data structures, or other logical constructs. Such instructions can be implemented to perform a task, implement a data type, transform the state of one or more components, achieve a technical effect, or otherwise arrive at a desired result.

The logic processor can include one or more physical processors (hardware) configured to execute software instructions. Additionally or alternatively, the logic processor can include one or more hardware logic circuits or firmware devices configured to execute hardware-implemented logic or firmware instructions. Processors of the logic processor 802 can be single-core or multicore, and the instructions executed thereon can be configured for sequential, parallel, and/or distributed processing. Individual components of the logic processor optionally can be distributed among two or more separate devices, which can be remotely located and/or configured for coordinated processing. Aspects of the logic processor can be virtualized and executed by remotely accessible, networked computing devices configured in a cloud-computing configuration. In such a case, these virtualized aspects are run on different physical logic processors of various different machines, it will be understood. Non-volatile storage device 806 includes one or more physical devices configured to hold instructions executable by the logic processors to implement the methods and processes described herein. When such methods and processes are implemented, the state of non-volatile storage device 806 can be transformed-e.g., to hold different data.

Non-volatile storage device 806 can include physical devices that are removable and/or built in. Non-volatile storage device 806 can include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 806 can include nonvolatile, dynamic, static, read/write, read-only, sequential-access, location-addressable, file-addressable, and/or content-addressable devices. It will be appreciated that non-volatile storage device 806 is configured to hold instructions even when power is cut to the non-volatile storage device 806. Volatile memory 804 can include physical devices that include random access memory. Volatile memory 804 is typically utilized by logic processor 802 to temporarily store information during processing of software instructions. It will be appreciated that volatile memory 804 typically does not continue to store instructions when power is cut to the volatile memory 804.

Aspects of logic processor 802, volatile memory 804, and non-volatile storage device 806 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), SOC, and complex programmable logic devices (CPLDs), for example.

The terms "module," "program," and "engine" can be used to describe an aspect of computing system 800 typically implemented in software by a processor to perform a particular function using portions of volatile memory, which function involves transformative processing that specially configures the processor to perform the function. Thus, a module, program, or engine can be instantiated via logic processor 802 executing instructions held by non-volatile storage device 806, using portions of volatile memory 804. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 808 can be used to present a visual representation of data held by non-volatile storage device 806. The visual representation can take the form of a graphical user interface (GUI). As the herein described methods and processes change the data held by the non-volatile storage device, and thus transform the state of the non-volatile storage device, the state of display subsystem 808 can likewise be transformed to visually represent changes in the underlying data. Display subsystem 808 can include one or more display devices utilizing virtually any type of technology. Such display devices can be combined with logic processor 802, volatile memory 804, and/or non-volatile storage device 806 in a shared enclosure, or such display devices can be peripheral display devices.

When included, input subsystem 810 can comprise or interface with one or more user-input devices such as a keyboard, mouse, touch screen, or game controller. In some embodiments, the input subsystem can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 812 can be configured to communicatively couple various computing devices described herein with each other, and with other devices. Communication subsystem 812 can include wired and/or wireless communication devices compatible with one or more different communication protocols. As non-limiting examples, the communication subsystem can be configured for communication via a wireless telephone network, or a wired or wireless local- or wide-area network, such as a HDMI over Wi-Fi connection. In some embodiments, the communication subsystem can allow computing system 800 to send and/or receive messages to and/or from other devices via a network such as the Internet.

The systems and processes described herein have the potential benefits of improving the reliability of artificial intelligence and machine learning decision making systems by utilizing multi-dimensional spaces in multiple artificial intelligence models corresponding to multiple streams of input data, and using past human learning experiences are used to create a baseline for the predictions and classifications that are outputted by the artificial intelligence models. Simple sensing of a single parameter as an indication of aircraft damage is multiplexed with other single source sensory inputs making this different from other systems that measure a parameter and compare to historic values of that same parameter.

It will be appreciated that "and/or" as used herein refers to the logical disjunction operation, and thus A and/or B has the following truth table.

| A | B | A and/or B |
|---|---|---|
| T | T | T |
| T | F | T |
| F | T | T |
| F | F | F |

Further, it will be appreciated that the terms "includes," "including," "has," "contains," variants thereof, and other similar words used in either the detailed description or the claims are intended to be inclusive in a manner similar to the term "comprising" as an open transition word without precluding any additional or other elements.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. Further, the disclosure comprises configurations according to the following clauses.
Clause 1. A maintenance computing system, comprising: a processor and a non-volatile memory storing executable instructions that, in response to execution by the processor, cause the processor to: execute an inspection classifier including at least a first artificial intelligence model, the inspection classifier being configured to: receive run-time event input data from a plurality of data sources associated with a vehicle, the data sources including structural health monitoring sensors instrumented on the vehicle; extract features of the run-time event input data; determine a predicted inspection classification based upon the extracted features, the predicted inspection classification being one of a plurality of candidate inspection classifications; and output the predicted inspection classification.
Clause 2. The maintenance computing system of clause 1, wherein the inspection classifier has been trained on inspection classifier training data including inspection training input data and associated inspection ground truth labels, the inspection training input data including structural health data from one or more structural health monitoring sensors instrumented on the vehicle, and the inspection ground truth labels being user inputted inspection classifications associated with the inspection training input data, the user inputted inspection classifications being selected from the plurality of candidate inspection classifications.
Clause 3. The maintenance computing system of clause 1 or 2, wherein the inspection classifier training data further includes at least one of camera images, audio data, or dimensional measurements; and wherein the run-time event input data further includes at least one of camera images, audio data, or dimensional measurements.
Clause 4. The maintenance computing system of any of clauses 1 to 3, wherein the processor is configured to: receive user input of an adopted inspection classification for the run-time event input data; and perform feedback training of the first artificial intelligence model using the run-time event input data and the adopted inspection classification as a feedback training data pair.
Clause 5. The maintenance computing system of any of clauses 1 to 4, wherein the one or more structural health monitoring sensors are selected from the group consisting of inertial accelerometers, inertial gyroscopes, strain gauges, displacement transducers, air speed sensors, and temperature sensors.
Clause 6. The maintenance computing system any of clauses 1 to 5, wherein the candidate inspection classifications include recommending no non-destructive inspection, recommending a simple non-destructive inspection, and recommending a complex non-destructive inspection.
Clause 7. The maintenance computing system of clause 4, wherein the processor is further configured to execute a repair classifier including at least a second artificial intelligence model, the repair classifier being configured to: receive run-time inspection input data including inspection-associated input data and the adopted inspection classification; extract inspection features of the run-time inspection input data; determine a predicted repair classification based upon the extracted inspection features, the predicted repair classification being one of a plurality of candidate repair classifications; and output the predicted repair classification.
Clause 8. The maintenance computing system of clause 7, wherein the repair classifier has been trained on repair classifier training data including repair training input data and associated ground truth labels, the repair training input data including imaging studies and electrical measurements, and the ground truth labels being user inputted repair classifications associated with the repair training input data, the user inputted repair classifications being selected from the plurality of candidate repair classifications.
Clause 9. The maintenance computing system of clause 7 or 8, wherein the candidate repair classifications include simple repair, complex repair, monitoring without repair, and no monitoring or repair.
Clause 10. The maintenance computing system of any of clauses 7 to 9, wherein the processor is configured to: receive user input of an adopted repair classification for the run-time inspection input data; and perform feedback training of the second artificial intelligence model using the inspection-associated input data and the adopted repair classification as a feedback training data pair.
Clause 11. The maintenance computing system of clause 7, wherein the processor further executes a monitoring classifier including at least a third artificial intelligence model, the monitoring classifier being configured to: receive run-time repair input data including repair-associated input data and an adopted repair classification; extract repair features of the run-time repair input data; determine a predicted monitoring classification based upon the extracted repair features, the predicted monitoring classification being one of a plurality of candidate monitoring classifications; and output the predicted monitoring classification.
Clause 12. The maintenance computing system of clause 11, wherein the repair-associated input data include at least one of repair materials or type of repair.
Clause 13. The maintenance computing system of clause 11 or 12, wherein the predicted monitoring classification includes a predicted lifecycle of the repair, a monitoring schedule for the repair, and a monitoring repair action.
Clause 14. The maintenance computing system of clause 11, wherein the processor is configured to: receive user input of an adopted monitoring classification for the run-time repair input data; and perform feedback training of the third artificial intelligence model using the run-time repair input data and the adopted monitoring classification as a feedback training data pair.
Clause 15. A maintenance computing method, comprising: executing an inspection classifier using a processor and associated memory, the inspection classifier including at least a first artificial intelligence model, executing the inspection classifier including: receiving run-time event input data from a plurality of data sources associated with a vehicle, the data sources including structural health monitoring sensors instrumented on the vehicle; extracting features of the run-time event input data; determining a predicted inspection classification based upon the extracted features, the predicted inspection classification being one of a plurality of candidate inspection classifications; and outputting the predicted inspection classification.
Clause 16. The maintenance computing method of clause 15, further comprising: prior to executing the inspection classifier, training the inspection classifier on inspection classifier training data including training input data and associated ground truth labels, the training input data including structural health data from the structural health monitoring sensors instrumented on the vehicle, and the ground truth labels being user inputted inspection classifications associated with the training input data, the user inputted inspection classifications being selected from the plurality of candidate inspection classifications.
Clause 17. The maintenance computing method of clause 15 or 16, wherein the inspection classifier training data further includes at least one of camera images, audio data, or dimensional measurements; and wherein the run-time event input data further includes at least one of camera images, audio data, or dimensional measurements.
Clause 18. The maintenance computing method of any of clauses 15 to 17, further comprising: receiving user input of an adopted inspection classification for the run-time event input data; and performing feedback training of the first artificial intelligence model using the run-time event input data and the adopted inspection classification as a feedback training data pair.
Clause 19. The maintenance computing method of any of clauses 15 to 18, wherein the structural health monitoring sensors are selected from the group consisting of inertial accelerometers, inertial gyroscopes, strain gauges, displacement transducers, air speed sensors, temperature sensors.
Clause 20. The maintenance computing method of any of clauses 15 to 19, wherein the candidate inspection classifications include recommending no non-destructive inspection, recommending a simple non-destructive inspection, and recommending a complex non-destructive inspection.
Clause 21. The maintenance computing method of clause 18, further comprising: executing a repair classifier including at least a second artificial intelligence model, executing the inspection classifier including: receiving run-time inspection input data including inspection-associated input data and the adopted inspection classification; extracting inspection features of the run-time inspection input data; determining a predicted repair classification based upon the extracted inspection features, the predicted repair classification being one of a plurality of candidate repair classifications; and outputting the predicted repair classification.
Clause 22. The maintenance computing method of clause 21, further comprising: prior to executing the repair classifier, training the repair classifier on repair classifier training data including repair classifier training input data and associated ground truth labels, the repair classifier training input data including imaging studies and electrical measurements, and the ground truth labels being user inputted repair classifications associated with the repair classifier training input data, the user inputted repair classifications being selected from the plurality of candidate repair classifications.
Clause 23. The maintenance computing method of clause 21 or 22, wherein the candidate repair classifications include simple repair, complex repair, monitoring without repair, and no monitoring or repair.
Clause 24. The maintenance computing method of any of clauses 21 to 23, wherein the processor is configured to: receiving user input of an adopted repair classification for the run-time inspection input data; and performing feedback training of the second artificial intelligence model using the run-time inspection input data and the adopted repair classification as a feedback training data pair.
Clause 25. The maintenance computing method of clause 21, further comprising: executing a monitoring classifier including at least a third artificial intelligence model, executing the monitoring classifier including: receiving run-time repair input data including repair-associated input data and an adopted repair classification; extracting repair features of the run-time repair input data; determining a predicted monitoring classification based upon the extracted repair features, the predicted monitoring classification being one of a plurality of candidate monitoring classifications; and outputting the predicted monitoring classification.
Clause 26. The maintenance computing method of any of clauses 25, wherein the repair-associated input data include at least one of repair materials or type of repair.
Clause 27. The maintenance computing method of clause 25 or 26, wherein the plurality of candidate monitoring classifications include a predicted lifecycle of the repair, a monitoring schedule for the repair, and a monitoring repair action.
Clause 28. The maintenance computing method of any of clauses 25 to 27, further comprising: prior to executing the monitoring classifier, training the monitoring classifier on monitoring training data including monitoring training input data and associated ground truth labels, the monitoring training input data including imaging studies and electrical measurements, and the ground truth labels being user inputted repair classifications associated with inspection training input data, the user inputted repair classifications being selected from the plurality of candidate repair classifications.
Clause 29. The maintenance computing method of any of clauses 25 to 28, further comprising: receiving user input of an adopted monitoring classification for the run-time repair input data; and performing feedback training of the third artificial intelligence model using the run-time repair input data and the adopted monitoring classification as a feedback training data pair.
Clause 30. A maintenance computing system, comprising: a processor and a non-volatile memory storing executable instructions that, in response to execution by the processor, cause the processor to: execute an inspection classifier configured to determine a predicted inspection classification based on run-time event input data from structural health monitoring sensors instrumented on a vehicle; output the predicted inspection classification; receiving user input of an adopted inspection classification for the run-time event input data; performing feedback training of the inspection classifier using the run-time event input data and the adopted inspection classification as a feedback training data pair; execute a repair classifier to determine a predicted repair classification based upon run-time inspection input data including inspection-associated input data and the adopted inspection classification; output the predicted repair classification; receive user input of an adopted repair classification for the run-time inspection input data; and perform feedback training of the repair classifier using the run-time inspection input data and the adopted repair classification as a feedback training data pair.
Clause 31. The maintenance computing system of clause 31, wherein the processor is further configured to: execute a monitoring classifier to determine a predicted monitoring classification based upon run-time repair input data including repair-associated input data and the adopted repair classification; output the predicted monitoring classification; receive user input of an adopted monitoring classification for the run-time repair input data; and perform feedback training of the monitoring classifier using the run-time repair input data and the adopted monitoring classification as a feedback training data pair.

The subject disclosure includes all novel and non-obvious combinations and subcombinations of the various features and techniques disclosed herein. The various features and techniques disclosed herein are not necessarily required of all examples of the subject disclosure. Furthermore, the various features and techniques disclosed herein may define patentable subject matter apart from the disclosed examples and may find utility in other implementations not expressly disclosed herein.

## Claims

1. A maintenance computing system (10), comprising:
a processor (12) and a non-volatile memory (20) storing executable instructions that, in response to execution by the processor (12), cause the processor (12) to:
execute an inspection classifier (22) including at least a first artificial intelligence model (22a), the inspection classifier (22) being configured to:
receive run-time event input data (28A-C) from a plurality of data sources associated with a vehicle, the data sources including structural health monitoring sensors instrumented on the vehicle;
extract features (22f) of the run-time event input data (28A-C);
determine a predicted inspection classification (54A) based upon the extracted features (22f), the predicted inspection classification (54A) being one of a plurality of candidate inspection classifications (30Aa-c); and
output the predicted inspection classification (54A).

2. The maintenance computing system (10) of claim 1, wherein the inspection classifier (22) has been trained on inspection classifier training data (27) including inspection training input data (29A) and associated inspection ground truth labels (29B), the inspection training input data (29A) including structural health data from one or more structural health monitoring sensors instrumented on the vehicle, and the inspection ground truth labels (29B) being user inputted inspection classifications (130A) associated with the inspection training input data (29A), the user inputted inspection classifications (130A) being selected from the plurality of candidate inspection classifications (30Aa-c) and optionally wherein the inspection classifier training data (27) further includes at least one of camera images, audio data, or dimensional measurements; and
wherein the run-time event input data (28A-C) further includes at least one of camera images, audio data, or dimensional measurements.

3. The maintenance computing system (10) of claim 1 or 2, wherein the one or more structural health monitoring sensors are selected from the group consisting of inertial accelerometers, inertial gyroscopes, strain gauges, displacement transducers, air speed sensors, and temperature sensors.

4. The maintenance computing system (10) of any one of claims 1-3, wherein the processor (12) is configured to:
receive user input (38) of an adopted inspection classification (30A) for the run-time event input data (28A-C); and
perform feedback training of the first artificial intelligence model (22a) using the run-time event input data (28A-C) and the adopted inspection classification (30A) as a feedback training data pair (31A).

5. The maintenance computing system (10) of claim 4, wherein the processor (12) is further configured to execute a repair classifier (24) including at least a second artificial intelligence model (24a), the repair classifier (24) being configured to:
receive run-time inspection input data (30A, 48A-C) including inspection-associated input data (48A-C) and the adopted inspection classification (30A);
extract inspection features (24f) of the run-time inspection input data (30A, 48A-C);
determine a predicted repair classification (54B) based upon the extracted inspection features (24f), the predicted repair classification (54B) being one of a plurality of candidate repair classifications (30Ba-d);
output the predicted repair classification (54B);
receive user input (38) of an adopted repair classification (30B) for the run-time inspection input data (30A, 48A-C); and
perform feedback training of the second artificial intelligence model (24a) using the inspection-associated input data (48A-C) and the adopted repair classification (30B) as a feedback training data pair (31B).

6. The maintenance computing system (10) of claim 5, wherein the repair classifier (24) has been trained on repair classifier training data (47) including repair training input data (49A) and associated ground truth labels (49B), the repair training input data (49A) including imaging studies and electrical measurements, and the ground truth labels (49B) being user inputted repair classifications (30B) associated with the repair training input data (49A), the user inputted repair classifications (30B) being selected from the plurality of candidate repair classifications (30Ba-d).

7. The maintenance computing system (10) of claim 5, wherein the processor (12) further executes a monitoring classifier (26) including at least a third artificial intelligence model (26a), the monitoring classifier (26) being configured to:
receive run-time repair input data (30B, 58A-C) including repair-associated input data (58A-C) and an adopted repair classification (30B);
extract repair features (26f) of the run-time repair input data (30B, 58A-C);
determine a predicted monitoring classification (54C) based upon the extracted repair features (26f), the predicted monitoring classification (54C) being one of a plurality of predicted monitoring classification (30Ca-c);
output the predicted monitoring classification (54C);
receive user input (38) of an adopted monitoring classification (30C) for the run-time repair input data (30B, 58A-C);
perform feedback training of the third artificial intelligence model (26a) using the run-time repair input data (30B, 58A-C) and the adopted monitoring classification (30C) as a feedback training data pair (31C) and optionally wherein the repair-associated input data (58A-C) include at least one of repair materials or type of repair.

8. A maintenance computing method (300), comprising:
executing an inspection classifier (22) using a processor (12) and associated memory (20), the inspection classifier (22) including at least a first artificial intelligence model (22a), executing the inspection classifier (22) including:
receiving run-time event input data (28A-C) from a plurality of data sources associated with a vehicle, the data sources including structural health monitoring sensors instrumented on the vehicle;
extracting features (22f) of the run-time event input data (28A-C);
determining a predicted inspection classification (54A) based upon the extracted features (22f), the predicted inspection classification (54A) being one of a plurality of candidate inspection classifications (30Aa-c);
outputting the predicted inspection classification (54A);
receiving user input (38) of an adopted inspection classification (30A) for the run-time event input data (28A-C); and
performing feedback training of the first artificial intelligence model (22a) using the run-time event input data (28A-C) and the adopted inspection classification (30A) as a feedback training data pair (31A).

9. The maintenance computing method (300) of claim 8, further comprising:
prior to executing the inspection classifier (22), training the inspection classifier (22) on inspection classifier training data (27) including training input data (29A) and associated ground truth labels (29B), the training input data (29A) including structural health data from the structural health monitoring sensors instrumented on the vehicle, and the ground truth labels (29B) being user inputted inspection classifications (30A) associated with the training input data, the user inputted inspection classifications (30A) being selected from the plurality of candidate inspection classifications (30Aa-c).

10. The maintenance computing method (300) of claim 9,
wherein the inspection classifier training data (27) further includes at least one of camera images, audio data, or dimensional measurements; and
wherein the run-time event input data (28A-C) further includes at least one of camera images, audio data, or dimensional measurements and optionally wherein the structural health monitoring sensors are selected from the group consisting of inertial accelerometers, inertial gyroscopes, strain gauges, displacement transducers, air speed sensors, temperature sensors.

11. The maintenance computing method (300) of any one of claims 8-10, further comprising:
executing a repair classifier (24) including at least a second artificial intelligence model (24a), executing the inspection classifier (22) including:
receiving run-time inspection input data (30A, 48A-C) including inspection-associated input data (48A-C) and the adopted inspection classification (30A);
extracting inspection features (24f) of the run-time inspection input data (30A, 48A-C);
determining a predicted repair classification (54B) based upon the extracted inspection features (24f), the predicted repair classification (54B) being one of a plurality of candidate repair classifications (30Ba-d);
outputting the predicted repair classification (54B);
receiving user input (38) of an adopted repair classification (30B) for the run-time inspection input data (30A, 48A-C); and
performing feedback training of the second artificial intelligence model (24a) using the run-time inspection input data (30A, 48A-C) and the adopted repair classification (30B) as a feedback training data pair (31B).

12. The maintenance computing method (300) of claim 11, further comprising:
prior to executing the repair classifier (24), training the repair classifier (24) on repair classifier training data (47) including repair classifier training input data (49A) and associated ground truth labels (49B), the repair classifier training input data (49A) including imaging studies and electrical measurements, and the ground truth labels (49B) being user inputted repair classifications (30B) associated with the repair classifier training input data (49A), the user inputted repair classifications (30B) being selected from the plurality of candidate repair classifications (30Ba-d).

13. The maintenance computing method (300) of claim 11, further comprising:
executing a monitoring classifier (26) including at least a third artificial intelligence model (26a), executing the monitoring classifier (26) including:
receiving run-time repair input data (30B, 58A-C) including repair-associated input data (58A-C) and an adopted repair classification (30B);
extracting repair features (26f) of the run-time repair input data (30B, 58A-C);
determining a predicted monitoring classification (54C) based upon the extracted repair features (26f), the predicted monitoring classification (54C) being one of a plurality of predicted monitoring classification (30Ca-c);
outputting the predicted monitoring classification (54C);
receiving user input (38) of an adopted monitoring classification (30C) for the run-time repair input data (30B, 58A-C); and
performing feedback training of the third artificial intelligence model (26a) using the run-time repair input data (30B, 58A-C) and the adopted monitoring classification (30C) as a feedback training data pair (31C).

14. The maintenance computing method (300) of claim 13, wherein the repair-associated input data (58A-C) include at least one of repair materials or type of repair.

15. The maintenance computing method (300) of claim 13, further comprising:
prior to executing the monitoring classifier (26), training the monitoring classifier (26) on monitoring training data (59A, 59B) including monitoring training input data (59A) and associated ground truth labels (59B), the monitoring training input data (59A) including imaging studies and electrical measurements, and the ground truth labels (59B) being user inputted monitoring classifications (30C) associated with inspection training input data (29A), the user inputted monitoring classifications (30C) being selected from the plurality of candidate monitoring classifications (30Ca-d).
